# EUROPEAN PATENT APPLICATION

(11) **EP 2 312 136 A1**
(43) Date of publication of application: **20.04.2011**
(21) Application number: 10186694.5
(22) Date of filing: 06.10.2010
(51) Int. Cl.: F01N 5/02, F01K 23/06, F02G 5/04, F01K 13/02, F01C 20/26

(54) **Waste heat regeneration system**

(30) Priority: 15.10.2009 JP 2009238298
(71) Applicant: Kabushiki Kaisha Toyota Jidoshokki, Kariya-shi, Aichi 448-8671 (JP)
(72) Inventor: Mori, Hidefumi, Kariya-shi Aichi 448-8671 (JP); Iguchi, Masao, Kariya-shi Aichi 448-8671 (JP); Enokijima, Fuminobu, Kariya-shi Aichi 448-8671 (JP); Kawaguchi, Masahiro, Kariya-shi Aichi 448-8671 (JP)
(74) Representative: TBK-Patent

(57) **Abstract**

A waste heat regeneration system for a vehicle having a vehicle engine actuated by a start-stop switch includes Rankine cycle circuit, a motor generator, a by-pass circuit and a control device. The Rankine cycle circuit includes a pump, a boiler heating the heat medium by heat exchanging with waste heat generated by the vehicle engine, an expansion device and a condenser. The by-pass circuit is connected to the Rankine cycle circuit at the upstream and downstream sides of the condenser and the communication of the heat medium is openable and closable therethrough. When the start-stop switch of the vehicle engine is turned off, the control device controls the by-pass circuit to communicate the heat medium therethrough and keeps controlling of the rotational speed of the motor generator until pressure difference between the upstream and downstream of the expansion device is decreased to a predetermined level, and then stops the control.

## Description

### BACKGROUND OF THE INVENTION

The present invention relates to a waste heat regeneration system, and more particularly to a waste heat regeneration system using Rankine cycle.

Waste heat regeneration system using the Rankine cycle converting waste heat generated by a vehicle engine into power has been developed. Generally, the Rankine cycle has a Rankine cycle circuit including a pump for pumping liquid refrigerant, a boiler for vaporizing the liquid refrigerant by heat exchanging with the waste heat generated by the vehicle engine, an expansion device for expanding the gas refrigerant thereby to generate power and a condenser for condensing gas refrigerant.

A waste heat regeneration system having a cool water boiler and an exhaust gas boiler is disclosed in the Japanese Patent Application Publication No. 2007-85195. Referring to Fig. 1 of the Publication, the waste heat regeneration system includes the Rankine cycle circuit 17 having the first heat exchanger 15 as a cool water boiler for heating the refrigerant by heat exchanging with the cool water of the radiator and the second heat exchanger 3 as an exhaust gas boiler for heating the refrigerant by heat exchanging with the exhaust gas emitted from the vehicle engine 1. In the Rankine cycle circuit 17, the refrigerant discharged from the refrigerant pump 4 absorbs heat in the first and second heat exchangers 15, 3, then expanded by the expansion device 5 thereby to generate power, and the refrigerant is condensed by the cooler (condenser) 6 thereby to release heat.

In the conventional Rankine cycle circuit, a motor generator converting driving force into electric power is connected to the output shaft of the expansion device, and the rotational speed of the output shaft of the expansion device is controlled by the control device to generate electric power. In the waste heat regeneration system of such structure, when the start-stop switch of the vehicle is turned off for stopping the vehicle engine, the operation of the Rankine cycle circuit is also stopped. If the controlling of the rotational speed of the motor generator for preventing the rotational speed from being increased to exceed a permissible value is stopped suddenly simultaneously with the stop of the Rankine cycle, a pressure difference remains between the upstream and downstream sides of the expansion device, so that the rotational speed of the motor generator may be increased to exceed a permissible value thereby to cause development of a noise vibration (NV) of the vehicle and deterioration of and damage to the motor generator.

The present invention is directed to providing a waste heat regeneration system including Rankine cycle circuit having an expansion device connected to a motor generator for controlling the rotational speed of the motor generator, according to which the rotational speed of the motor generator is prevented from being increased to exceed a permissible value when the start-stop switch is turned off for stopping the vehicle engine.

### SUMMARY OF THE INVENTION

In accordance with the present invention, a waste heat regeneration system for a vehicle has a vehicle engine actuated by a start-stop switch. The waste heat regeneration system includes a Rankine cycle circuit, a motor generator, a by-pass circuit and a control device. The Rankine cycle circuit includes a pump pumping heat medium, a boiler heating the heat medium by heat exchanging with waste heat generated by the vehicle engine, an expansion device expanding the heat medium to generate motion power and a condenser condensing the heat medium. The motor generator converts the motion power into electric power. The by-pass circuit is connected to the Rankine cycle circuit at the upstream side and the downstream side of the condenser so as to communicate or discommunicate the heat medium through the by-pass circuit. The control device controls the rotational speed of the motor generator and the operation of the waste heat regeneration system. When the start-stop switch of the vehicle engine is turned off, the control device controls the by-pass circuit to communicate the heat medium through the by-pass circuit and keeps controlling of the rotational speed of the motor generator until pressure difference between the upstream and the downstream of the expansion device is decreased to a predetermined level, and then stops the control.

Other aspects and advantages of the invention will become apparent from the following description, taken in conjunction with the accompanying drawings, illustrating by way of example the principles of the invention.

### BRIEF DESCRIPTION OF THE DRAWINGS

The invention together with objects and advantages thereof, may best be understood by reference to the following description of the presently preferred embodiments together with the accompanying drawings in which:
Fig. 1 is an illustrative schematic view showing a configuration of a waste heat regeneration system according to a first preferred embodiment of the present invention;
Fig. 2 is an illustrative schematic view showing a configuration of a waste heat regeneration system according to a second preferred embodiment of the present invention;
Fig. 3 is an illustrative schematic view showing a configuration of a waste heat regeneration system according to a third preferred embodiment of the present invention; and
Fig. 4 is an illustrative schematic view showing a configuration of a waste heat regeneration system according to a fourth preferred embodiment of the present invention.

### DETAILED DESCRIPTION OF THE PREFERRED EMBODIMENTS

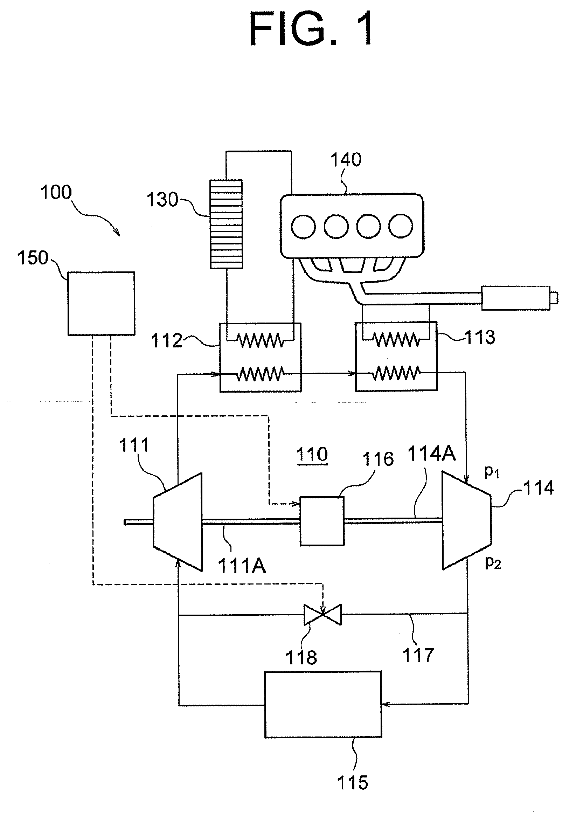

The following will describe a waste heat regeneration system 100 according to a first preferred embodiment of the present invention with reference to Fig. 1. Referring to Fig. 1, the waste heat regeneration system 100 has a Rankine cycle circuit 110, a radiator 130, a vehicle engine 140 and a control device 150. The Rankine cycle circuit 110 includes a gear pump 111 having a drive shaft 111A, a cool water boiler 112, an exhaust gas boiler 113, an expansion device 114 having an output shaft 114A and a condenser 115 through which refrigerant circulates. The refrigerant serves as heat medium. Specifically, the gear pump 111 adiabatically compresses liquid refrigerant and discharges the compressed liquid refrigerant. The cool water boiler 112 heats the liquid refrigerant at a constant pressure by heat exchanging with cool water of the radiator 130. The exhaust gas boiler 113 heats the liquid refrigerant at a constant pressure by heat exchanging with exhaust gas discharged from the vehicle engine 140. Thus, the cool water boiler 112 and the exhaust gas boiler 113 heat the refrigerant at a constant pressure to vaporize the liquid refrigerant. The expansion device 114 adiabatically expands the vaporized refrigerant or the gas refrigerant thereby to generate power. The gas refrigerant is condensed at a constant pressure by the condenser 115. In the following description, a region in the Rankine cycle circuit 110 that is downstream of the gear pump 111 and upstream of the expansion device 114 will be hereinafter referred to as "high-pressure region", and a region that is downstream of the expansion device 114 and upstream of the gear pump 111 will be referred to as "low-pressure region".

Power generated when the gas refrigerant is expanded by the expansion device 114 rotates the output shaft 114A of the expansion device 114 connected to the drive shaft 111A of the gear pump 111 through a motor generator 116. The motor generator 116 converts the rotating power into electric power and is electrically connected to the control device 150. The control device 150 controls the operation of the waste heat regeneration system 100. Specifically, the control device 150 controls the rotational speed of the motor generator 116 such that the rotational speed of the motor generator 116 is prevented from being increased to exceed a permissible value. The control device 150 also controls so that the temperature of the inlet of the expansion device 114 becomes a predetermined value. The control device 150 has incorporated therein a built-in timer for counting time.

A by-pass passage 117 is connected to the Rankine cycle circuit 110 and serves as a by-pass circuit. One end of the by-pass passage 117 is connected to the condenser 115 at the upstream side thereof, and the other end of the by-pass passage 117 is connected to the condenser 115 at the downstream side thereof. It is so adjusted that the pressure loss of the by-pass passage 117 is sufficiently smaller than that of the condenser 115. In other words, the by-pass passage 117 is connected to the Rankine cycle circuit 110 at the upstream and downstream side of the condenser 115 so as to communicate or discommunicate the refrigerant therethrough, and the pressure loss of the refrigerant flowing through the by- pass passage 117 is smaller than pressure loss of the refrigerant flowing through the condenser 115. A valve 118 is disposed in the by-pass passage 117 and electrically connected to the control device 150. The control device 150 controls the operation of the valve 118 and hence the opening or closing of the by-pass passage 117.

The following will describe the operation of the waste heat regeneration system 100 according to the first preferred embodiment of the present invention.

While the vehicle engine 140 of the vehicle is running and the rotational speed of the motor generator 116 is controlled, the valve 118 is closed, and, therefore, the by-pass passage 117 is closed. In this case, the refrigerant discharged from the gear pump 111 is vaporized into a high-temperature gas refrigerant while flowing through the cool water boiler 112 and the exhaust gas boiler 113. Then, the gas refrigerant is expanded by the expansion device 114 to generate power, and condensed by the condenser 115 into a liquid refrigerant. The liquid refrigerant is introduced back into the gear pump 111.

If the start-stop switch of the vehicle engine 140 is turned off by the operator, the control device 150 controls the valve 118 to be opened and the by-pass passage 117 is opened. Simultaneously, the built-in timer of the control device 150 starts counting of time and the control device 150 waits until a predetermined time T (described later) passes. The predetermined time T is a length of time that is elapsed until such a state is reached that the rotational speed of the motor generator 116 does not exceed a permissible value after the controlling of the rotational speed of the motor generator 116 by the control device 150 is stopped.

During this time, the refrigerant discharged from the gear pump 111 is vaporized while passing through the cool water boiler 112 and the exhaust gas boiler 113 and then expanded by the expansion device 114. Since the by-pass passage 117 is then opened and the pressure loss of the by-pass passage 117 is adjusted so as to be sufficiently smaller than that of the condenser 115 as described earlier, the gas refrigerant from the expansion device 114 is not flowed into the condenser 115, but flowed through the by-pass passage 117 and back to the gear pump 111. The gear pump 111 has an inlet capacity that is smaller than that of the expansion device 114, so that a capacity difference exists between the inlets. The pressure of the low-pressure region of the Rankine cycle circuit 110 is gradually increased due to the inlet capacity difference, with the result that the pressure difference ΔP (ΔP=P1-P2) between the pressure P1 prevailing upstream of the expansion device 114 and a pressure P2 prevailing downstream of the expansion device 114 is gradually decreased close to zero.

The length of time that is required for the above pressure difference Δp to be decreased to a predetermined level δp (about 0.2 MPa) at which the rotational speed of the motor generator 116 will not exceed a permissible level after the controlling of the rotational speed of the motor generator 116 is stopped is previously found out by experiment, and such data of time is previously stored in a memory of the control device 150. The control device 150 stops the control of the rotational speed of the motor generator 116 after an elapse of the time T. In other words, the control device 150 previously stores the length of time required for the pressure difference to be decreased to the predetermined level, and the control device 150 keeps controlling of the rotational speed of the motor generator 116 for the length of time. Thus, the rotational speed of the motor generator 116 is prevented from being increased to exceed the permissible value.

As described above, the waste heat regeneration system 100 according to the first preferred embodiment of the present invention has the by-pass passage 117 for communication between the upstream and downstream sides of the condenser 115. When the start-stop switch of the vehicle engine 140 is turned off, the by-pass passage 117 is opened and the controlling of the rotational speed of the motor generator 116 is stopped only after the pressure difference ΔP between the upstream and downstream sides of the expansion device 114 becomes below the predetermined value level δP. In other words, when the start-stop switch of the vehicle engine 140 is turned off, the control device 150 controls the by-pass circuit 117 to communicate the heat medium through the by-pass circuit 117 and keeps controlling of the rotational speed of the motor generator 116 until pressure difference between the upstream and the downstream of the expansion device 114 is decreased to a predetermined level, and then stops the control. Thus, when the start-stop switch of the vehicle engine 140 is turned off, the rotational speed of the motor generator 116 is prevented from being increased to exceed a permissible value.

Depending on the expansion device 114 and the gear pump 111, the pressure difference ΔP may not be decreased close to zero, but close to a value δP' due to the inlet capacity difference between the expansion device 114 and the gear pump 111. In this case, if the value δP' is below the predetermined value level δP, the rotational speed of the motor generator 116 is prevented from being increased to exceed a permissible value.

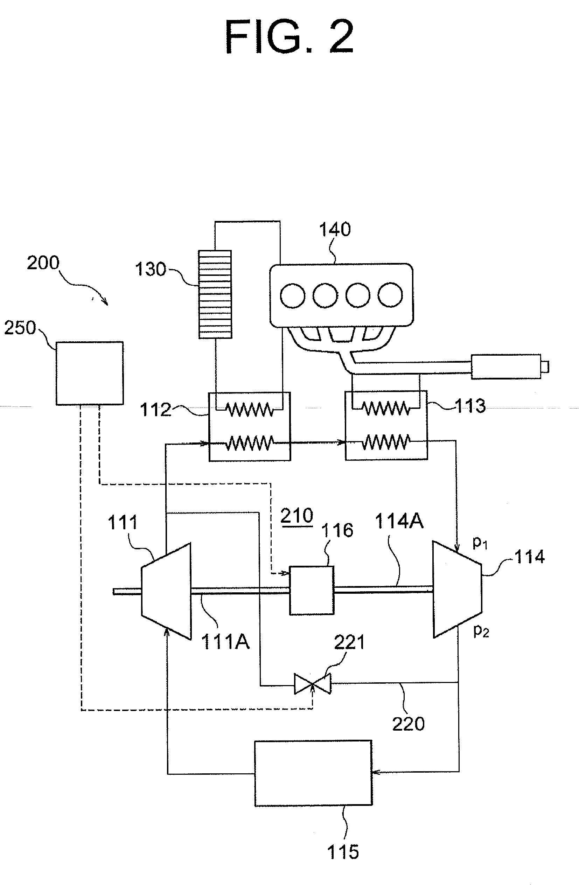

The following will describe a waste heat regeneration system 200 according to a second preferred embodiment of the present invention with reference to Fig. 2.

In the waste heat regeneration system 200 according to the second preferred embodiment of the present invention, a by-pass passage 220 connected for communication between the downstream sides of the gear pump 111 and the expansion device 114, instead of the by-pass passage 117 connected for communication between the upstream and downstream sides of the condenser 115 according to the first preferred embodiment of the present invention, so that the high-pressure and low-pressure regions of the Rankine cycle circuit 210 are in communication with each other. In other words, the by-pass passage 220 is connected to the Rankine cycle circuit 210 at the downstream side of the gear pump 111 and the downstream side of the expansion device 114 and communicable between the high-pressure and low-pressure regions in the Rankine cycle circuit 210 and serves as a by-pass circuit.

When the start-stop switch of the vehicle engine 140 is turned off, the control device 250 controls the valve 221 in the by-pass passage 220 to be opened, so that the by-pass passage 220 is opened, and the high-pressure and low-pressure regions of the Rankine cycle circuit 210 are made in communication with each other. Then, the high-pressure liquid refrigerant discharged from the gear pump 111 is flowed through the by-pass passage 220 and merged into the low-pressure gas refrigerant on the downstream side of the expansion device 114. In other words, when the start-stop switch of the vehicle engine 140 is turned off, the control device 250 controls the by-pass circuit 220 to communicate the refrigerant therethrough. Then, a part of the low-pressure refrigerant is vaporized by the high-pressure liquid refrigerant, so that the pressures of the high-pressure and the low-pressure regions are instantly equalized. As a result, the pressure difference ΔP between the upstream and downstream sides of the expansion device 114 becomes rapidly zero. Thus, the control device 250 may controls the rotational speed of the motor generator 116 to be stopped simultaneously with the opening of the by-pass passage 220.

As described above, the waste heat regeneration system 200 according to the second preferred embodiment of the present invention has the by-pass passage 220 for communication between the downstream sides of the gear pump 111 and the expansion device 114, so that the high-pressure and low-pressure regions of the Rankine cycle circuit 210 are in communication with each other. Thus, the rotational speed of the motor generator 116 is prevented from being increased to exceed a permissible value. The controlling of the rotational speed of the motor generator 116 may be stopped simultaneously with the opening of the by-pass passage 220.

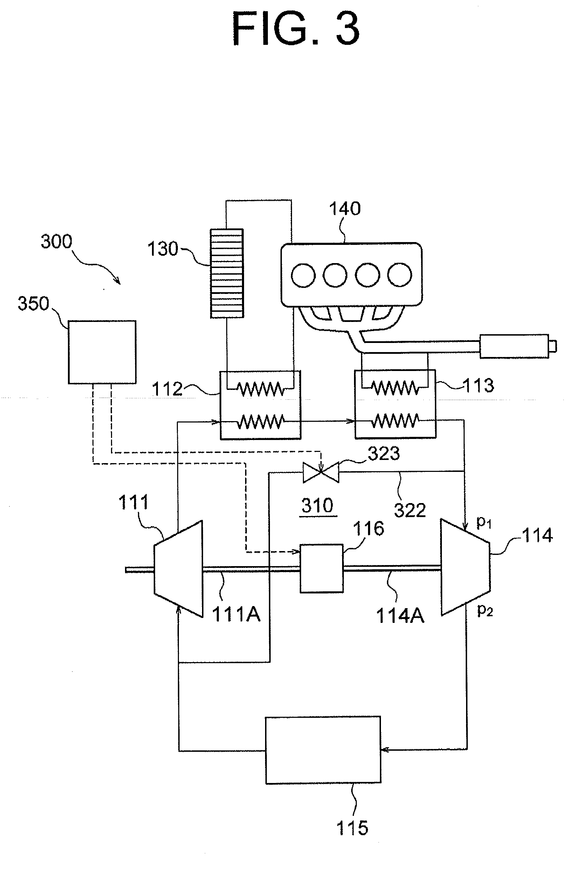

The following will describe a waste heat regeneration system 300 according to a third preferred embodiment of the present invention with reference to Fig. 3.

In the waste heat regeneration system 300 according to the third preferred embodiment of the present invention, the by-pass passage 322 is connected for communication between the upstream sides of the gear pump 111 and the expansion device 114, instead of the by-pass passage 220 of the second preferred embodiment of the present invention, so that the high-pressure and low-pressure regions of the Rankine cycle circuit 310 are in communication with each other. In other words, the by-pass passage 322 is connected to the Rankine cycle circuit 310 at the upstream side of the gear pump 111 and the upstream side of the expansion device 114 and communicable between the high-pressure and low-pressure regions in the Rankine cycle circuit 310 and serves as a by-pass circuit.

When the start-stop switch of the vehicle engine 140 is turned off, the control device 350 controls the valve 323 in the by-pass passage 322 to be opened, so that the by-pass passage 322 is opened, and the high-pressure and low-pressure regions of the Rankine cycle circuit 310 are in communication with each other. In other words, when the start-stop switch of the vehicle engine 140 is turned off, the control device 350 controls the by-pass passage 322 to communicate the refrigerant therethrough. Then, the high-pressure gas refrigerant on the upstream side of the expansion device 114 is flowed through the by-pass passage 322 and merged into the low-pressure liquid refrigerant on the upstream side of the gear pump 111. Then, a part of the high-pressure gas refrigerant is condensed by the low-pressure liquid refrigerant, so that the pressures of the high-pressure and low-pressure regions are instantly equalized. As a result, the pressure difference ΔP between the upstream and downstream sides of the expansion device 114 rapidly becomes zero. Thus, the control device 350 may control the rotational speed of the motor generator 116 to be stopped simultaneously with the opening of the by-pass passage 322.

As described above, the waste heat regeneration system 300 according to the third preferred embodiment of the present invention has the by-pass passage 322 for communication between the upstream sides of the gear pump 111 and the expansion device 114, so that the high-pressure and low-pressure regions of the Rankine cycle circuit 310 are in communication with each other. Thus, the rotational speed of the motor generator 116 is prevented from being increased to exceed a permissible value. The controlling of the rotational speed of the motor generator 116 may be stopped simultaneously with opening of the by-pass passage 322 is opened.

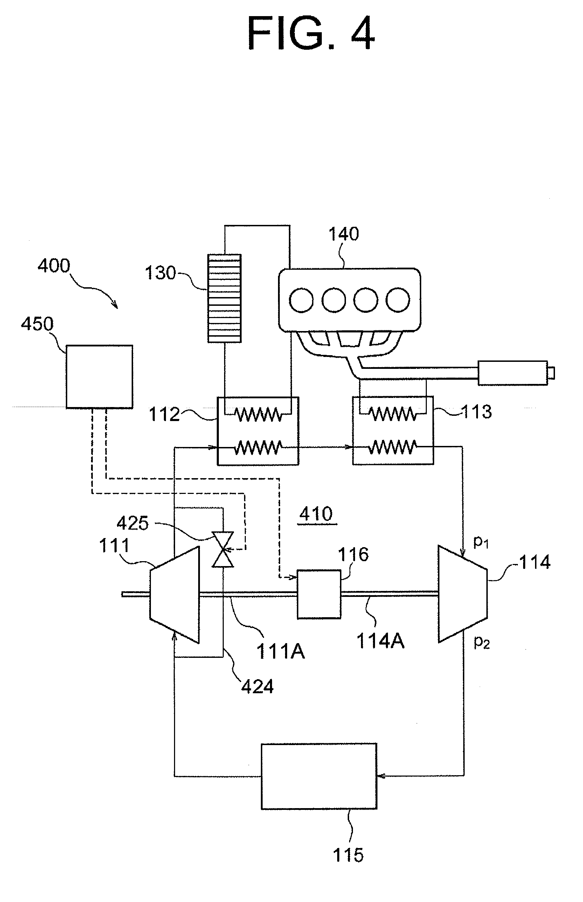

The following will describe a waste heat regeneration system 400 according to a fourth preferred embodiment of the present invention with reference to Fig. 4.

In the waste heat regeneration system 400 according to the fourth preferred embodiment of the present invention, a by-pass passage 424 is formed for communication between the downstream side of the gear pump 111 and the upstream side of the expansion device 114, instead of the by-pass passage 220 of the second preferred embodiment of the present invention, so that the high-pressure and low-pressure regions of the Rankine cycle circuit 410 are in communication with each other. In other words, the by-pass passage 424 is connected to the Rankine cycle circuit 410 at the upstream side of the gear pump 111 and the downstream side of the gear pump 111 and communicable between the high-pressure and low-pressure regions in the Rankine cycle circuit 410 and serves as a by-pass circuit.

When the start-stop switch of the vehicle engine 140 is turned off, the control device 450 may control the valve 425 in the by-pass passage 424 to be opened, so that the by-pass passage 424 is opened, and the high-pressure and low-pressure regions of the Rankine cycle circuit 410 are in communication with each other. In other words, when the start-stop switch of the vehicle engine 140 is turned off, the control device 450 controls the by-pass passage 424 to communicate the refrigerant therethrough. Then, the high-pressure gas refrigerant discharged from the gear pump 111 is flowed through the by-pass passage 424 and merged into the low-pressure liquid refrigerant on the upstream side of the gear pump 111, so that the pressures of the high-pressure and low-pressure regions of the Rankine cycle circuit 410 are instantly equalized. As a result, the pressure difference ΔP between the upstream and downstream sides of the expansion device 114 rapidly becomes zero. Thus, the control device 450 may control the rotational speed of the motor generator 116 to be stopped simultaneously with the opening of the by-pass passage 424.

As described above, the waste heat regeneration system 400 according to the fourth preferred embodiment of the present invention has the by-pass passage 424 for communication between the downstream side of the gear pump 111 and the upstream side of the gear pump 111, so that the high-pressure and low-pressure regions of the Rankine cycle circuit 410 are in communication with each other. Thus, the rotational speed of the motor generator 116 is prevented from being increased to exceed a permissible value. The controlling of the rotational speed of the motor generator 116 may be stopped simultaneously with the opening of the by-pass passage 424.

The present invention may be practiced in various ways. For example, in the first preferred embodiment of the present invention, pressure sensors may be disposed on the upstream and downstream sides of the expansion device 114 for detecting the pressure P1 on the upstream side of the expansion device 114 and the pressure P2 on the downstream side of the expansion device 114 for calculating the pressure difference ΔP (ΔP=P1-P2), based on which it may be determined whether or not the pressure difference Δp becomes below the predetermined value level δP.

According to the second through fourth preferred embodiments of the present invention, the by-pass passages 220, 322, 424 are formed between the downstream sides of the gear pump 111 and the expansion device 114, the upstream sides of the gear pump 111 and the expansion device 114 and the downstream and upstream sides of the gear pump 111, respectively, for communication between the high-pressure and low-pressure regions of the Rankine cycle circuit. Alternatively, any by-pass passage may be formed such that the high-pressure and low-pressure regions are in communication with each other through such by-pass passage.

A waste heat regeneration system for a vehicle having a vehicle engine actuated by a start-stop switch includes Rankine cycle circuit, a motor generator, a by-pass circuit and a control device. The Rankine cycle circuit includes a pump, a boiler heating the heat medium by heat exchanging with waste heat generated by the vehicle engine, an expansion device and a condenser. The by-pass circuit is connected to the Rankine cycle circuit at the upstream and downstream sides of the condenser and the communication of the heat medium is openable and closable therethrough. When the start-stop switch of the vehicle engine is turned off, the control device controls the by-pass circuit to communicate the heat medium therethrough and keeps controlling of the rotational speed of the motor generator until pressure difference between the upstream and downstream of the expansion device is decreased to a predetermined level, and then stops the control.

## Claims

1. A waste heat regeneration system (100) for a vehicle having a vehicle engine (140) actuated by a start-stop switch, the waste heat regeneration system (100) comprising:
a Rankine cycle circuit (110) including:
a pump (111) pumping heat medium;
a boiler (113) heating the heat medium by heat exchanging with waste heat generated by the vehicle engine (140);
an expansion device (114) expanding the heat medium to generate motion power; and
a condenser (115) condensing the heat medium; and
a motor generator (116) converting the motion power into electric power, **characterized in that** the waste heat regeneration system (100) has a by-pass circuit (117, 118) connected to the Rankine cycle circuit (110) at the upstream side and the downstream side of the condenser (115) so as to communicate or discommunicate the heat medium through the by-pass circuit (117, 118), and a control device (150) controls the rotational speed of the motor generator (116) and the operation of the waste heat regeneration system (100, 200, 300, 400),
and **in that** when the start-stop switch of the vehicle engine (140) is turned off, the control device (150) controls the by-pass circuit (117, 118) to communicate the heat medium through the by-pass circuit (117, 118) and keeps controlling of the rotational speed of the motor generator (116) until pressure difference between the upstream and the downstream of the expansion device (114) is decreased to a predetermined level, and then stops the control.

2. The waste heat regeneration system (100) according to claim 1, **characterized in that** the by-pass circuit includes a valve (118), and the control device (150) controls the valve (118) to be opened to communicate the heat medium through the by-pass circuit (117, 118).

3. The waste heat regeneration system (100) according to claim 1 or 2, **characterized in that** pressure loss of the heat medium flowing through the by-pass circuit (117) is smaller than pressure loss of the heat medium flowing through the condenser (115).

4. The waste heat regeneration system (100) according to any one of claims 1 through 3, **characterized in that** an inlet capacity of the pump (111) is smaller than an inlet capacity of the expansion device (114).

5. The waste heat regeneration system (100) according to any one of claims 1 through 4, **characterized in that** the control device (150) previously stores a length of time required for the pressure difference to be decreased to the predetermined level, and the control device (150) keeps controlling of the rotational speed of the motor generator (116) for the length of time.

6. A waste heat regeneration system (200, 300, 400) for a vehicle having a vehicle engine (140) actuated by a start-stop switch, the waste heat regeneration system (200, 300, 400) comprising:
a Rankine cycle circuit (210, 310,410) including:
a pump (111) pumping heat medium;
a boiler (113) heating the heat medium by heat exchanging with waste heat generated by the vehicle engine (140);
an expansion device (114) expanding the heat medium to generate motion power; and
a condenser (115) condensing the heat medium; and
a motor generator (116) converting the motion power into electric power,
**characterized in that** the waste heat regeneration system (200, 300, 400) has a by-pass circuit (220, 322, 424) connected to the Rankine cycle circuit (210, 310, 410) and communicable between a region downstream of the pump (111) and upstream of the expansion device (114) and a region downstream of the expansion device (114) and upstream of the pump (111) in the Rankin cycle circuit (220, 322, 424), and a control device (250, 350, 450) controlling the rotational speed of the motor generator (116) and the operation of the waste heat regeneration system (200, 300, 400),
and **in that** when the start-stop switch of the vehicle engine (140) is turned off, the control device (250, 350, 450) controls the by-pass circuit (220, 322, 424) to communicate the heat medium through the by-pass circuit (220, 322, 424).

7. The waste heat regeneration system (200, 300, 400) according to claim 6, **characterized in that** the by-pass circuit (220, 322, 424) includes a valve (221, 323, 425), and the control device (250, 350, 450) controls the valve (221, 323, 425) to be opened to communicate the heat medium through the by-pass circuit (220, 322, 424).

8. The waste heat regeneration system (200) according to claim 6 or 7, **characterized in that** the by-pass circuit (220) is connected to the Rankine cycle circuit (210) at the downstream side of the pump (111) and the downstream side of the expansion device (114).

9. The waste heat regeneration system (300) according to claim 6 or 7, **characterized in that** the by-pass circuit (322) is connected to the Rankine cycle circuit (310) at the upstream side of the pump (111) and the upstream side of the expansion device (114).

10. The waste heat regeneration system (400) according to claim 6 or 7, **characterized in that** the by-pass circuit (424) is connected to the Rankine cycle circuit (410) at the upstream side of the pump (111) and the downstream side of the pump (111).
